# EUROPÄISCHE PATENTANMELDUNG

(11) **EP 4 279 292 A1**
(43) Veröffentlichungstag der Anmeldung: **22.11.2023**
(21) Anmeldenummer: 23174002.8
(22) Anmeldetag: 17.05.2023
(51) Int. Cl.: B42D 25/435, B41J 2/44, B42D 25/41, B23K 26/00

(54) **VORRICHTUNG ZUR BEARBEITUNG VON DOKUMENTEN**

(30) Priorität: 19.05.2022 DE 102022112628; 19.05.2022 DE 102022112629
(71) Anmelder: MB Automation GmbH & Co. KG, 93426 Roding (DE)
(72) Erfinder: Roch, Julia, 09221 Neukirchen/Erzgebirge (DE)
(74) Vertreter: noventive Patentanwaltsgesellschaft mbH

(57) **Zusammenfassung**

Die vorliegende Erfindung betrifft eine Vorrichtung zur Bearbeitung von Dokumenten (Dokumentenbearbeitungssystem (10)), insbesondere von Sicherheitsdokumenten. Das erfindungsgemäße Dokumentenbearbeitungssystem (10), insbesondere zur Bearbeitung von Sicherheitsdokumenten, weist wenigstens eine Dokumententrägervorrichtung (12) mit einer Dokumentenaufnahme (121), dazu konfiguriert ein zu bearbeitendes Dokument (51) aufzunehmen und entlang einer ersten Raumrichtung zu transportieren, und wenigstens eine Dokumentenbearbeitungseinrichtung, dazu konfiguriert das Dokument (51) in einem Bearbeitungsbereich (82a) zu bearbeiten, sodass ein sichtbares Element (551) auf dem Dokument (51) entsteht, auf. Die Dokumentenbearbeitungseinrichtung weist dabei eine Strahlenquelle (54) und wenigstens eine erste Spiegelanordnung (21) und wenigstens eine zweite Spiegelanordnung (22) auf, wobei die Spiegelanordnungen (21, 22) jeweils dazu konfiguriert sind, von der Strahlenquelle (54) emittierte Strahlung zur Erzeugung eines sichtbaren Elements (551) unter einem bestimmten Winkel und/oder aus einer bestimmten Richtung auf das Dokument (51) zu leiten. Die Spiegelanordnungen (21, 22) sind weiterhin dazu ausgebildet in den Bearbeitungsbereich (82a, 82b) verfahren zu werden.

## Beschreibung

Die Erfindung betrifft eine Vorrichtung zur Bearbeitung von Dokumenten (Dokumentenbearbeitungssystem), insbesondere von Sicherheitsdokumenten. Das Dokumentenbearbeitungssystem ist dabei insbesondere zur Personalisierung von Dokumenten vorgesehen. Die zu bearbeitenden Dokumente können hierbei insbesondere kartenartige oder buchartige Dokumente und insbesondere Sicherheitsdokumente, wie etwa Ausweisdokumente oder Kreditkarten, Bankkarten, Mitgliedskarten und ähnliches, sein.

Aus dem Stand der Technik ist eine Vielzahl verschiedener Typen von personalisierten Dokumenten, insbesondere in Kartenform oder Buchform bekannt. So gehören beispielsweise buchartige Passdokumente oder einzelne Seiten davon (z.B. die sog. "Pass- Inhaberseite" oder Papierseiten), Ausweiskarten und viele Arten von personalisierten Chipkarten, etwa Bankkarten, Kreditkarten, Ausweiskarten, Mitgliedskarten, Zugangsberechtigungskarten usw. oder personenbezogene (meist kartenförmige) Etiketten jeweils zur Gruppe der personalisierten Dokumente.

Dabei bedeutet "Personalisierung" bzw. "personalisiert", dass das entsprechende Dokument eine dokumentenindividuelle Information enthält oder trägt, die typischerweise einem Inhaber des Dokuments zugeordnet ist. So kann die Information etwa in einigen Fällen den Inhaber identifizieren, beispielsweise anhand seines Namens, seines Passfotos, einer Identitätsnummer oder anderer Merkmale, die auf dem Dokument aufgedruckt, anderweitig aufgebracht oder eingebracht oder in ihm, insbesondere in Form von Daten, gespeichert sind. Die Personalisierung kann dabei insbesondere individuell auf eine einzelne Person bezogen sein oder aber auch auf eine bestimmte begrenzte Gruppe von Personen, beispielsweise Mitarbeiter eines Unternehmens.

Das Bearbeiten der Dokumente zum Versehen derselben mit dokumentenindividueller und/oder nicht dokumentenindividueller Information kann dabei insbesondere mittels Druckens, mittels Gravur oder, insbesondere im Falle einer Kunststoffoberfläche, mittels gezielter lokaler Verfärbung des Oberflächenmaterials des Dokuments, insbesondere in Graustufen bzw. Abstufungen davon, durch Energieeinwirkung, insbesondere mittels eines geeigneten Lasers erfolgen.

In der Offenlegungsschrift DE 10 2006 031 024 A1 sind ein Dokumentenbearbeitungssystem und ein Verfahren zum Bedrucken von Sicherheitsdokumenten beschrieben. Das Dokumentenbearbeitungssystem umfasst dabei eine Druckeinheit zum Bedrucken eines in einem Druckbereich befindlichen Sicherheitsdokuments und eine Zuführeinheit zum nacheinander Zuführen der Sicherheitsdokumente in den Druckbereich. Die Zuführeinheit weist dabei mehrere verfahrbare Dokumententräger (Dokumententrägervorrichtung) auf, um ein zu bedruckendes Sicherheitsdokument aufzunehmen und in den Druckbereich und aus dem Druckbereich zu verfahren. Die Vorrichtung weist zudem eine Antriebseinrichtung auf, um die Dokumententräger entlang einer Zuführungsrichtung auf verschiedenen senkrecht zur Zuführungsrichtung angeordneten Ebenen zu verfahren. Sie weist des Weiteren eine Steuereinheit zum Ansteuern der Antriebsvorrichtung auf, sodass die mehreren Dokumententräger jeweils im Wechsel zwischen einer Aufnahmeposition, in der ein Sicherheitsdokument aufgenommen wird, und dem Druckbereich bewegt werden. Dies erfolgt so, dass die Antriebseinrichtung die mehreren Trägereinrichtungen beim Verfahren in Zuführrichtung auf den verschiedenen Ebenen aneinander vorbeiführt.

Um die Fälschungssicherheit von Sicherheitsdokumenten zu erhöhen, werden Sicherheitsmerkmale in das Dokument eingearbeitet. Ein weit verbreitetes Sicherheitsmerkmal wird dabei durch ein so genanntes "Kippbild" realisiert, was auch unter den Abkürzungen "MLI" oder "CLI" bekannt ist. Ein Kippbild, welches beim Kippen des Dokuments um die horizontale Achse sichtbar wird, wird als MLI bezeichnet, während ein Kippbild, welches beim Kippen des Dokuments um die dazu um 90° gedrehte vertikale Achse sichtbar wird, als CLI bezeichnet wird.

Ein derartiges Kippbild weist in der Regel entlang seiner lateralen Ausdehnung eine Linsenstruktur als optisch wirksame Abbildungsstruktur auf und ist mit einer in der Linsenstruktur hinterlegten Informationsstruktur realisiert. Somit wird die eingebrachte Information lediglich dann sichtbar, wenn Lichtstrahlen durch die Linsenstruktur im richtigen Winkel gebrochen werden. Je nach Betrachtungsrichtung ist ein Bild also sichtbar oder nicht bzw. nur stark abgeschwächt sichtbar. Derartige Kippbilder sind beispielsweise als Sicherheitsmerkmale auf Kunststoffkarten und Ausweispapieren angebracht. Der Vorteil ist durch eine relativ einfache visuelle Prüfbarkeit der Kippbilder begründet, welche selbst bei einfachen Lichtverhältnissen gegeben ist. Ein solches Kippbild ist beispielsweise in der Patentschrift EP 0 219 012 A2 offenbart. Zur Erhöhung der Fälschungssicherheit können zusätzlich Relieflinsen vorgesehen sein, wie beispielsweise in der Patentschrift EP 0 216 947 A1 offenbart.

Zur Herstellung derartiger Kippbilder werden Laser in einem Dokumentenbearbeitungssystem eingesetzt, welche über Spiegelanordnungen auf das Dokument gerichtet werden können, um so das Kippbild auf das Sicherheitsdokument aufzubringen. Im Fall, dass mehrere Kippbilder an unterschiedlichen Positionen, oder, dass sowohl ein MLI-Kippbild als auch ein CLI-Kippbild auf das Dokument aufgebracht werden sollen, muss zunächst das Dokument aus dem Dokumentenbearbeitungssystem entfernt und die entsprechende Spiegelanordnung umgerüstet (Positions-, und/oder Ausrichtungsveränderung) werden, um mit der Bearbeitung fortfahren zu können. Häufig ist zudem ein Testlauf der geänderten Anordnung notwendig, um die Funktionsfähigkeit sicherzustellen. Der gesamte Vorgang ist somit zeit- und kostenintensiv.

Der vorliegenden Erfindung liegt somit die Aufgabe zugrunde ein Dokumentenbearbeitungssystem bereitzustellen, welches eine verbesserte Handhabung bei der Bearbeitung von Dokumenten, insbesondere bei der Einbringung von Sicherheitsmerkmalen in Form von Kippbildern, gewährleistet. Zudem ist es Aufgabe der vorliegenden Erfindung ein Verfahren zur Bearbeitung eines Dokuments anhand des erfindungsgemäßen Dokumentenbearbeitungssystems bereitzustellen.

Diese Aufgabe wird durch die Gegenstände der nebengeordneten Ansprüche gelöst. Vorteilhafte Weiterbildungen der Erfindung sind in den Unteransprüchen enthalten.

Das erfindungsgemäße Dokumentenbearbeitungssystem weist eine Dokumententrägervorrichtung mit einer Dokumentenaufnahme auf. Die Dokumententrägervorrichtung ist dabei zum Aufnehmen und zum Transport eines zu bearbeitenden Dokuments ausgebildet, wobei der Transport entlang einer ersten Raumrichtung erfolgt. Im Rahmen dieser Anmeldung ist unter dem "Aufnehmen eines Dokuments" zu verstehen, dass dieses in die Dokumentenaufnahme eingelegt und insbesondere von diesem fixiert werden kann. Die Dokumentenaufnahme kann dabei insbesondere als Vertiefung in einer Fläche vorgesehen sein, wobei die Abmessungen der Vertiefung exakt den Abmessungen des aufzunehmenden Dokuments entspricht. Durch eine derartige Vertiefung wird das Dokument zudem gegen eine horizontale Verschiebung auf der Dokumententrägervorrichtung fixiert. Andere Möglichkeiten der formschlüssigen Fixierung oder beispielsweise durch Unterdruck oder durch den Druck einer von oben auf das Dokument aufgesetzten Maske, welche das Dokument in die Dokumentenaufnahme drückt, sind ebenfalls denkbar.

Weiterhin weist das Dokumentenbearbeitungssystem eine Dokumentenbearbeitungseinrichtung auf, welche dazu konfiguriert ist, ein Dokument in einem Bearbeitungsbereich zu bearbeiten, sodass ein sichtbares Element auf dem Dokument entsteht. Im Rahmen der Anmeldung ist unter der Bearbeitung eines Dokuments das Einbringen eines sichtbaren Elements zu verstehen, welches personenbezogene dokumentenbezogene Daten wie Name, Geburtsdatum oder Passfoto und/oder sichtbare Sicherheitsmerkmale, wie insbesondere Kippbilder, umfasst. Dabei können die aufzubringenden Daten selbst auch als Sicherheitsmerkmal vorgesehen werden.

Die Dokumentenbearbeitungseinrichtung weist weiterhin eine Strahlenquelle, wenigstens eine erste Spiegelanordnung und wenigstens eine zweite Spiegelanordnung auf. Die Spiegelanordnungen sind dabei jeweils dazu konfiguriert, von der Strahlenquelle emittierte Strahlung zur Erzeugung des sichtbaren Elements unter einem bestimmten Winkel und aus einer bestimmten Richtung auf das Dokument zu leiten. Die Spiegelanordnungen sind weiterhin dazu ausgebildet vorzugsweise entlang einer zweiten Raumrichtung in den Bearbeitungsbereich hinein und aus dem Bearbeitungsbereich hinaus verfahren zu werden, um dort die emittierte Strahlung der Strahlungsquelle umleiten zu können. Vorzugsweise sind beide Spiegelanordnungen fest miteinander innerhalb der Bearbeitungseinrichtung verbunden und/oder in einem definierten Abstand zueinander auf der Bearbeitungseinrichtung angeordnet.

Durch das Verfahren verschiedener Spiegelanordnungen in den Bearbeitungsbereich, können unterschiedlich voreingestellte Spiegelanordnungen für die Bearbeitung verwendet werden, ohne das Dokument aus dem Dokumentenbearbeitungssystem zu entnehmen. Somit kann beispielsweise die erste Spiegelanordnung ein sichtbares Element auf dem Dokument an einer Position erzeugen und die zweite, anders konfigurierte Spiegelanordnung ein sichtbares Element an einer anderen Position. Genauso kann anhand der einen Spiegelanordnung ein CLI-Kippbild und anhand der anderen Anordnung ein MLI-Kippbild auf das Dokument aufgebracht werden. Dies vereinfacht die Bearbeitung des Dokuments, da zwischen dem Aufbringen unterschiedlicher sichtbarer Elemente keine Umrüstung der Spiegelanordnungen vorgenommen werden muss, sondern lediglich die eine Spiegelanordnung aus dem Bearbeitungsbereich herausgefahren und die anderen Spiegelanordnung in den Bearbeitungsbereich hineingefahren werden muss.

Gemäß einer vorteilhaften Ausführungsform der Erfindung ist die zweite Spiegelanordnung um 90 Grad zur ersten Spiegelanordnung um eine vertikale Achse gedreht. Dies hat zur Folge, dass auch die Richtung aus der die Strahlung auf das Dokument auftrifft um 90 Grad um die vertikale Achse gedreht ist. Somit können mit der Dokumentenbearbeitungseinrichtung Kippbilder erstellt werden, bei denen der Kippeffekt ebenfalls um 90 Grad gedreht ist. Dies ist insbesondere bei der Erstellung von MLI- und CLI-Elementen unumgänglich, da ein MLI-Kippbild zu einem CLI-Kippbild ebenfalls um 90 Grad gedreht ist. Wird also anhand der durch die erste Spiegelanordnung umgeleiteten Strahlung ein CLI-Element erzeugt, so wird anhand der durch die zweite Spiegelanordnung umgeleiteten Strahlung ein MLI-Element auf dem Dokument erzeugt und umgekehrt. Vorzugsweise ist die zweite Spiegelanordnung ebenso wie die erste Spiegelanordnung dazu ausgebildet ausrichtbar zu sein

In einer weiteren vorteilhaften Ausführungsform des erfindungsgemäßen Dokumentenbearbeitungssystems mit einer Strahlenquelle, emittiert diese Laserstrahlen in einem viereckigen, insbesondere rechteckigen, trapezförmigen, rautenförmigen oder quadratischen Bearbeitungsbereich. Der Bearbeitungsbereich ist dabei definiert durch die Fläche, welche durch die Laserstrahlen der Strahlenquelle erreicht werden können. Dabei weist das zu bearbeitende Dokument ebenfalls eine viereckige, insbesondere rechteckige, quadratische, parallelogrammförmige Form auf, wobei der Bearbeitungsbereich gegenüber dem Dokument um einen definierten Winkel, insbesondere 45 Grad, gedreht ist. Durch die Drehung kann insbesondere in Verbindung mit der Verwendung von Spiegelanordnungen, durch welche die Laserstrahlen auf das Dokument reflektiert werden, eine maximale Ausnutzung des Bearbeitungsfelds auf dem Dokument erreicht werden.

Vorzugsweise sind die beiden Spiegelanordnungen dazu ausgebildet entlang einer zweiten Raumrichtung in den Bearbeitungsbereich verfahren zu werden. Insbesondere sind dabei beide Spiegelanordnungen auf einer Vorrichtung vorgesehen, welche derart entlang der zweiten Raumrichtung verfahren werden kann, dass sich entweder die eine oder die andere Spiegelanordnung im Bearbeitungsbereich befindet.

In einer vorteilhaften Weiterbildung dieser Ausführungsform der Erfindung entspricht die erste Raumrichtung, entlang welcher das Dokument transportiert wird, nicht der zweiten Raumrichtung, in welcher die Spiegelanordnungen bewegt werden. Die erste und die zweite Raumrichtung sind also nicht identisch. In einer besonders bevorzugten Ausführungsformen steht die erste Raumrichtung dabei senkrecht auf der zweiten Raumrichtung. Durch eine derartige Ausführungsform kann das Dokument auf der Dokumententrägervorrichtung im Bearbeitungsbereich derart positioniert werden, dass auf jeder beliebigen Position auf dem Dokument ein sichtbares Element durch die Bearbeitungseinrichtung erzeugt werden kann, ohne das Dokument aus dem Dokumentenbearbeitungssystem zu entnehmen. Es ist dabei ebenfalls möglich mehrere sichtbare Elemente auf mehreren Positionen des Dokuments aufzubringen. Die Änderung der Position des zu erzeugenden sichtbaren Elements entlang der ersten Raumrichtung wird dabei durch die Bewegung der Dokumententrägervorrichtung vorgenommen, während die Änderung der Position des sichtbaren Elements entlang der zweiten Raumrichtung durch das Verfahren der Spiegelanordnungen vorgenommen werden kann.

In einer alternativen Ausführungsform der Erfindung entspricht die erste Raumrichtung, entlang welcher das Dokument mittels der Dokumententrägervorrichtung transportiert wird, der zweiten Raumrichtung, in welcher die Spiegelanordnungen bewegt werden. Die beiden Raumrichtungen sind somit identisch. Folglich bewegen sich also sowohl die Spiegelanordnungen als auch die Dokumententrägervorrichtung entlang derselben Raumrichtung. Dies führt zu einer besonders schmalen Bauform eines Dokumentenbearbeitungssystems.

In einer vorteilhaften Ausführungsform der Erfindung sind die Spiegelanordnungen dazu ausgebildet derart ausrichtbar zu sein, dass die Position des sichtbaren Elements auf dem Dokument verschoben wird. Unter dem Ausrichten der Spiegelanordnung ist im Rahmen der Anmeldung nicht das Verfahren der Spiegelanordnungen gemeint, sondern eine Drehung wenigstens eines Spiegels der Anordnung derart, dass die Strahlung durch die Spiegel in einer anderen Position auf das Dokument auftrifft oder eine Veränderung der Höhe des Spiegels, also eine Änderung des Abstands von einem Spiegel der Spiegelanordnung zum Dokument in vertikaler Richtung. Durch die Ausrichtung können kleine Änderungen der Bildposition auf dem Dokument vorgenommen werden, ohne eine andere Spiegelanordnung in das Bearbeitungssystem verfahren zu müssen. Eine Ausrichtbarkeit der Spiegelanordnungen ist insbesondere bei Ausführungsformen vorteilhaft, bei denen erste und zweite Raumrichtung identisch sind, also bei denen die Dokumententrägervorrichtung und die Spiegelanordnungen in die gleiche Richtung bewegt werden können. Durch die Ausrichtung kann die Position des sichtbaren Elements auf dem Dokument auch in einer von dieser Richtung abweichenden Richtung verändert werden. Damit kann die Flexibilität bei der Auswahl der Position des sichtbaren Elements auf dem Dokument deutlich erhöht werden.

In einer weiteren vorteilhaften Ausführungsform der Erfindung, weist die Bearbeitungseinrichtung weiterhin andere Bearbeitungswerkzeuge auf. Diese können ebenso wie die Spiegelanordnungen entlang einer zweiten Raumrichtung in den Bearbeitungsbereich verfahren werden. Somit sind auch Bearbeitungen des Dokuments innerhalb des Dokumentenbearbeitungssystems denkbar, welche beispielsweise unter der Verwendung anderer Bearbeitungsmethoden sichtbare Elemente oder Sicherheitsmerkmale auf das Dokument aufbringen. Andere Bearbeitungsmethoden können beispielsweise Prägen, Gravieren oder Drucken sein.

In einer vorteilhaften Ausführungsform der Erfindung weist die Dokumententrägervorrichtung eine Heizvorrichtung auf, welche dazu ausgebildet ist, Wärme an das von der Dokumententrägervorrichtung aufgenommene Dokument abzugeben.

Durch das Einbringen von Wärme können beispielsweise Trocknungsvorgänge beschleunigt, bzw. besser kontrolliert werden, wodurch sowohl die Bearbeitungsgeschwindigkeit als auch die Bearbeitungsqualität der Dokumentenbearbeitungseinrichtung verbessert werden kann.

Insbesondere bevorzugt ist eine derartige Ausführungsform dann, wenn die Heizvorrichtung einen Aktuator aufweist, welcher dazu eingerichtet ist, eine Relativbewegung zwischen einem erwärmten Wärmeleitelement und der Dokumentenaufnahme zu bewirken. Durch die Relativbewegung, kann zwischen zwei Betriebsmodi gewechselt werden, wobei sich in einem ersten Betriebsmodus das Wärmeleitelement durch eine oder mehrere Aussparungen in der Dokumentenaufnahme hindurch erstreckt, um von der Heizeinrichtung erzeugte Wärme zumindest abschnittsweise auf das Dokument zu übertragen. Im zweiten Betriebsmodus weist das Heizelement gegenüber dem ersten Betriebsmodus einen größeren Abstand zum Dokument auf, sodass keine oder nur eine unwesentliche Menge an Wärme auf das Dokument übertragen wird.

Auf diese Weise kann das Heizelement dauerhaft erwärmt bleiben und für Bearbeitungsschritte, bei denen eine Erwärmung benötigt wird in den ersten Betriebsmodus versetzt werden und bei Bearbeitungsschritten, bei denen keine Erwärmung benötigt wird in den zweiten Betriebsmodus wechseln. Dadurch können Aufheiz- und Abkühlphasen übersprungen werden und die Bearbeitung der Dokumente beschleunigt werden.

Weiterhin vorteilhaft ist eine Ausführungsform des Dokumentenbearbeitungssystems, welches eine Verstellvorrichtung aufweist, welche dazu ausgebildet ist, die Position und Ausrichtung der wenigstens einen ersten Spiegelanordnung und/oder der wenigstens einen zweiten Spiegelanordnung derart zu ändern, dass der entsprechende definierte Winkel, unter dem die von der Strahlenquelle emittierte Strahlung auf das Dokument auftrifft, verändert wird, ohne die Position des Auftreffens der Strahlung auf dem Dokument zu verändern. Durch die Verstellvorrichtung kann der Auftreffwinkel der Strahlung auf das Dokument eingestellt werden und somit das Dokumentenbearbeitungssystem auf unterschiedliche Anforderungen des zu bearbeitenden Dokuments, welche beispielsweise aus der Materialwahl oder Kundenanforderungen beruhen, eingestellt werden. Zudem ist ein Umrüsten auf unterschiedliche Produkte durch Verstellung der Spiegelanordnungen vereinfacht. Weiterhin kann durch eine derartige Ausführungsform verhindert werden, dass eine Anpassung der Software zur Erzeugung eines Kippbilds erfolgen muss, da ein symmetrischer Aufbau einer Spiegelanordnung aus zwei sich gegenüberliegenden Spiegeln zur Erzeugung des Kippbilds vorliegt.

Insbesondere bevorzugt ist eine derartige Ausführungsform, wenn die Verstellvorrichtung Aufnahmen, insbesondere in Form von Öffnungen aufweist, welche dazu ausgebildet sind, entsprechende an der wenigstens einen ersten Spiegelanordnung und/oder wenigstens einen zweiten Spiegelanordnung (22) angeordneten Gegenelemente zur Befestigung der entsprechenden Spiegelanordnung aufzunehmen. Durch eine derartige Ausführungsform kann eine Möglichkeit der Verstellvorrichtung bereitgestellt werden, welche einfach zu bedienen ist und das Risiko einer Fehlbedienung minimiert. Zudem ist sie technisch leicht umzusetzen.

Das erfindungsgemäße Verfahren zur Bearbeitung eines Dokuments durch ein erfindungsgemäßes Dokumentenbearbeitungssystem weist mehrere Schritte auf. Zunächst wird die Dokumententrägervorrichtung des Dokumentenbearbeitungssystems in eine Aufnahmeposition verfahren, in der ein zu bearbeitendes Dokument auf der Dokumentenaufnahme platziert wird. Anschließend wird die Dokumententrägervorrichtung entlang einer ersten Raumrichtung in eine Bearbeitungsposition innerhalb eines Bearbeitungsbereichs des Dokumentenbearbeitungssystems verfahren. Ferner erfolgt ein Verfahren einer ersten Spiegelanordnung in den Bearbeitungsbereich, sodass von einer Strahlenquelle im Bearbeitungsbereich emittierte Strahlung über die erste Spiegelanordnung zur Erstellung eines sichtbaren Elements auf das Dokument geleitet wird. Nach der Erstellung des sichtbaren Elements auf dem Dokument erfolgt das Verfahren einer zweiten Spiegelanordnung in den Bearbeitungsbereich, sodass von der Strahlenquelle im Bearbeitungsbereich emittierte Strahlung über die zweite Spiegelanordnung zur Erstellung eines weiteren sichtbaren Elements auf das Dokument geleitet wird. Nach der Bearbeitung wird die Dokumententrägervorrichtung in eine Ausgabeposition, in welcher das Dokument von der Dokumentenaufnahme entnommen wird, verfahren.

Die hinsichtlich der erfindungsgemäßen Vorrichtung beschriebenen Merkmale vorteilhafter Ausführungsformen der Vorrichtung gelten ebenso als Merkmale vorteilhafter Ausführungsformen des erfindungsgemäßen Verfahrens.

Im Folgenden werden Ausführungsformen und vorteilhafte Aspekte der vorliegenden Erfindung unter Bezugnahme auf die beiliegenden Figuren näher erläutert. Sie zeigen:
- Fig. 1: zeigt eine schematische Abbildung einer Dokumententrägervorrichtung 12 von oben
- Fig. 2a: zeigt eine schematische Abbildung eines Ausschnitts eines Dokumentenbearbeitungssystems 10 gemäß dem Stand der Technik in einer ersten Konfiguration.
- Fig. 2b: zeigt eine schematische Abbildung eines Dokuments 51 mit einem ersten sichtbaren Element 551a.
- Fig. 3a: zeigt eine schematische Abbildung eines Ausschnitts eines Dokumentenbearbeitungssystems 10 gemäß dem Stand der Technik in einer zweiten Konfiguration.
- Fig. 3b: zeigt eine schematische Abbildung eines Dokuments 51 mit einem zweiten sichtbaren Element 551b.
- Fig. 4a: zeigt eine schematische Abbildung einer zweiten Ausführungsform eines erfindungsgemäßen Dokumentenbearbeitungssystems 10 in einer ersten Konfiguration.
- Fig. 4b: zeigt eine schematische Abbildung der zweiten Ausführungsform eines erfindungsgemäßen Dokumentenbearbeitungssystems 10 in einer zweiten Konfiguration.
- Fig. 5a: zeigt eine Seitenansicht einer zweiten Ausführungsform der Erfindung in einer ersten Konfiguration
- Fig. 5b: zeigt eine Seitenansicht der in Fig. 5a gezeigten zweiten Ausführungsform der Erfindung in einer zweiten Konfiguration
- Fig. 5c: zeigt eine zur Darstellung in Fig. 5b um 90 Grad gedrehte Darstellung der in den Fig. 5a und 5b gezeigten zweiten Ausführungsform der Erfindung
- Fig. 5d: zeigt den Bearbeitungsbereich 82 der in den Fig. 5a, 5b, 5c gezeigten zweiten Ausführungsform

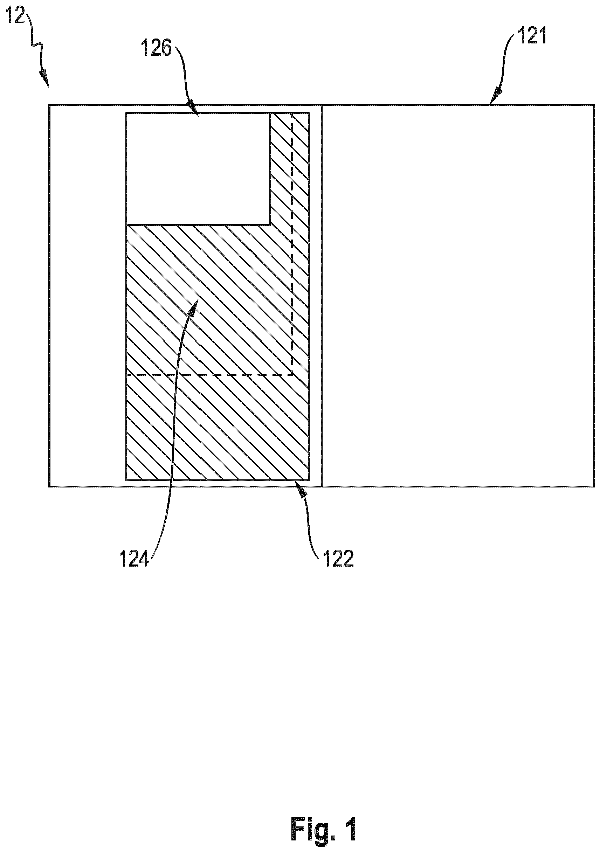

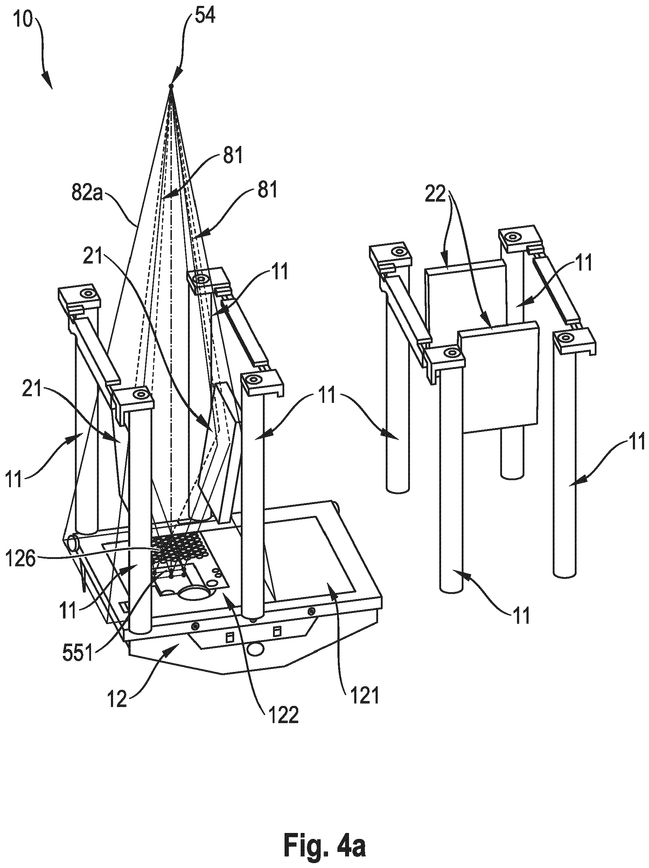

**Fig. 1** zeigt eine schematische Abbildung einer Dokumententrägervorrichtung 12 eines Dokumentenbearbeitungssystems 10 (nicht dargestellt in Fig. 1) von oben. Sie weist eine Dokumentenaufnahme 121 auf, welche insbesondere in Form einer Vertiefung in der Dokumententrägervorrichtung 12 vorgesehen ist. In diesen festgelegten Bereichen ist ein zu bearbeitendes Dokument 51 (nicht abgebildet in Fig. 1) für die Bearbeitung in einem Dokumentenbearbeitungssystem 10 (siehe Figs. 4a bis 5b) zu platzieren. Als Dokumentenaufnahme 121 ist das gesamte große Rechteck in der Figur zu verstehen. In der Dokumentenaufnahme 121 wiederum, auf der in Zeichenebene linken Seite befindet sich eine Bearbeitungsfläche 122, welche als schraffierter Bereich dargestellt ist. In diesem Bereich wird durch die Bearbeitung in einem Dokumentenbearbeitungssystem 10 ein sichtbares Element in das zu bearbeitende Dokument 51 eingebracht.

Die Dokumentenaufnahme 121 ist vorliegend derart ausgeführt, dass ein buchförmiges Dokument 51, wie beispielsweise ein Reisepass durch sie aufgenommen werden kann. Sie kann dabei ebenfalls einen Spalt in der Mitte aufweisen, in den der Buchrücken eines buchartigen Dokuments 51 aufgenommen werden kann. Auf der linken Seite der Dokumentenaufnahme 121 ist eine Kartenposition 124 angedeutet. Diese Kartenposition 124 kann beispielsweise durch eine weitere Vertiefung in der Dokumentenaufnahme 121 vorgesehen sein. Sie weist das genormte Format üblicher Kreditkarten, Ausweiskarte, Mitgliedskarten oder dergleichen auf. Durch die vorgesehenen entsprechenden Vertiefungen können die Karte oder das buchförmige Dokument auf der Dokumentenaufnahme 121 zumindest in seitlicher Richtung fixiert und so gegen ein Verrutschen gesichert werden.

Je nach zu bearbeitendem Dokument, wird dieses entweder in die Kartenposition 124 oder die Dokumentenaufnahme 121 eingelegt, wobei die Bearbeitung lediglich in der Bearbeitungsfläche 122 vorgenommen werden kann.

In einer vorteilhaften Ausführungsform wird ein buchförmiges Dokument auf die Dokumentenaufnahme 121 aufgelegt und durch eine Maske (nicht dargestellt), welche eine Aussparung für die Bearbeitungsfläche 122 des Dokuments hat, von oben auf die Dokumentenaufnahme 121 gedrückt, bis die Maske in einer bestimmten Position einrastet und so das Dokument flach auf der Dokumentenaufnahme 121 fixiert. Beide Seiten der Dokumentenaufnahme 121 sind dabei unabhängig voneinander gefedert. Je nach Seitenzahl des buchförmigen Dokuments wird eine Seite der Dokumentenaufnahme 121 möglicherweise stärker durch das Aufbringen der Maske belastet, was jedoch durch die unabhängige Lagerung der beiden Seiten ausgeglichen werden kann, sodass die Oberfläche des Dokuments eben zur Bearbeitung auf einer definierten Höhe vorliegt.

Um ein kartenförmiges Dokument in die Dokumententrägervorrichtung einzuspannen, wird ein Kartenadapter benötigt. Dieser hat die äußeren Maße des buchförmigen Dokuments und wird ebenso wie dieser auf die Dokumentenaufnahme 121 geklemmt. In diesen Adapter wiederrum wird nun das kartenförmige Dokument eingelegt. Leichte Fehler beim Einlegen der Dokumente werden über eine Software ausgeglichen. Hierbei misst eine Kamera eine mögliche Verdrehung und falsche Position aus und leitet sie an die Software weiter. Diese gleicht die Ungenauigkeiten aus und gibt die korrigierten Daten der an das Bearbeitungssystem weiter.

Innerhalb der Bearbeitungsfläche 122 ist ein Heizelement 126 angedeutet, welches dazu ausgebildet ist lokal Wärme auf das zu bearbeitende Dokument aufzubringen. Dies kann förderlich für einzelne Bearbeitungsschritte, beispielsweise zur Trocknung von Tinte oder ähnlichem sein. Daher ist das Heizelement 126 vorzugsweise in den Bereichen vorgesehen, in denen bei der Bearbeitung Tinte aufgebracht wird. Dies ist bei sicherheitskritischen Dokumenten üblicherweise zur Darstellung eines Passbildes der Fall. Somit befindet sich das Heizelement 126 vorzugsweise an der Stelle eines Passbildes eines Dokuments.

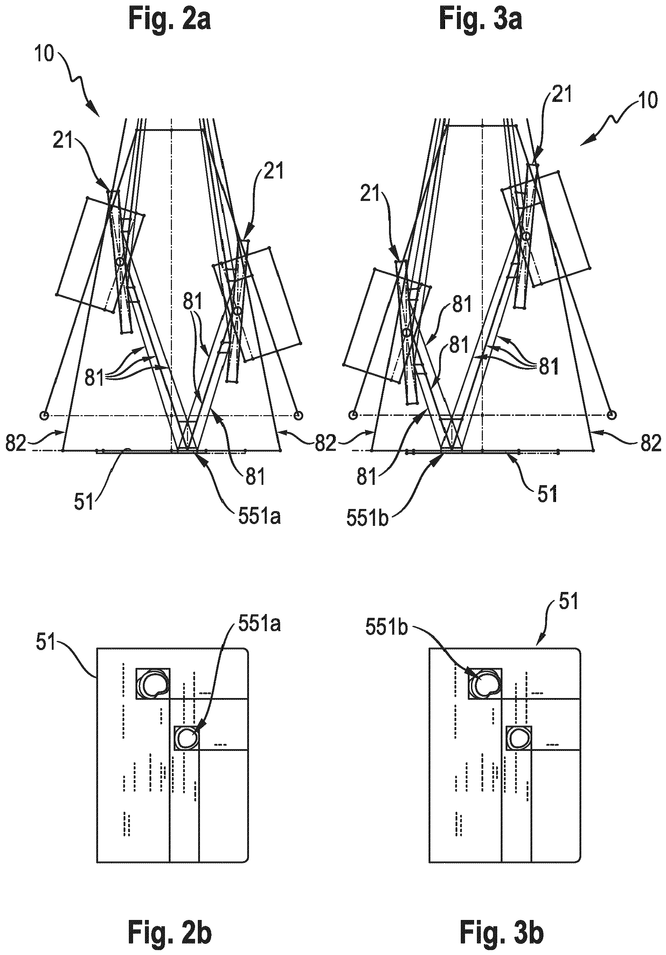

Die **Figs. 2a** und **3a** zeigen eine Ausführungsform eines Dokumentenbearbeitungssystems 10 gemäß dem Stand der Technik in zwei unterschiedlichen Konfigurationen. In einem Bearbeitungsbereich 82 ist eine erste Spiegelanordnung 21 angeordnet, welche die Laserstrahlen 81 einer Strahlenquelle (nicht dargestellt) auf ein zu bearbeitendes Dokument 51 lenkt. Auf die Darstellung der Befestigung der Spiegelanordnung 21 wird der Übersichtlichkeit halber verzichtet.

Die Spiegelanordnung 21 ist dabei in der ersten Konfiguration der Fig. 2a derart angeordnet, dass die Laserstrahlen 82 ein erstes sichtbares Element 551a auf einer bestimmten Position der Oberfläche des Dokuments 51 erzeugen. Das entsprechende Dokument 51 ist dabei in Fig. 2b in einer Draufsicht (Ansicht von oben) abgebildet, wo das erste sichtbare Element 551a an der definierten Position angedeutet ist. Die horizontale Achse des Dokuments 51 verläuft dabei in Zeichenebene von oben nach unten, während die vertikale Achse in Zeichenebene von links nach rechts verläuft.

Im Gegensatz dazu ist die Anordnung der ersten Spiegelanordnung 21 in Fig. 3a gemäß der zweiten Konfiguration derart modifiziert, dass nun die Laserstrahlen 82 auf eine andere Position auf der Oberfläche des Dokuments 51 geleitet werden als in der in Fig. 2a gezeigten Anordnung, wodurch ein zweites sichtbares Element 551b auf dem Dokument 51 sichtbar wird, wie Fig. 3b zeigt.

Die Änderung der Anordnung der Spiegelanordnung 21 ist dabei bei Dokumentenbearbeitungssystemen 10 gemäß dem Stand der Technik mit einigem Aufwand verbunden. So muss zunächst das Dokument 51 entfernt werden, bevor die Anordnung der Spiegelanordnung 21 verändert werden kann. Häufig muss zur Überprüfung der neuen Anordnung zusätzlich eine Kalibrierung bzw. ein Testlauf unternommen werden, wodurch die Bearbeitung und Erstellung zwei verschiedener sichtbarer Elemente 551a, 551b an zwei verschiedenen Positionen häufig zu einem langwierigen Prozess wird.

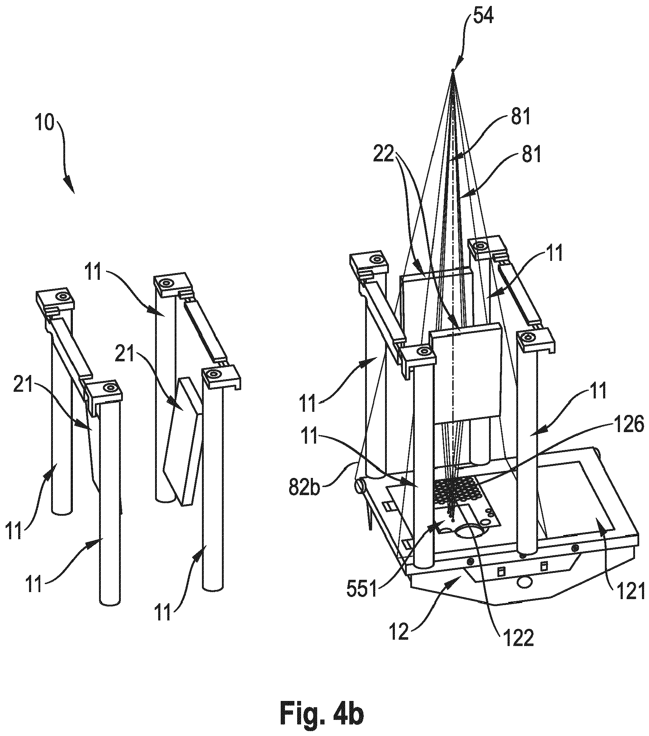

Die **Figs. 4a** und **4b** zeigen eine erfindungsgemäße Ausführungsform eines Dokumentenbearbeitungssystems 10 in unterschiedlichen Konfigurationen. Die Ausführungsform gemäß der Figs. 4a und 4b weist einen Bearbeitungsbereich 82a, 82b auf. Das Dokumentenbearbeitungssystem 10 weist eine Dokumentenbearbeitungseinrichtung 10 mit einer Strahlenquelle 54 in Form eines Lasers auf. Die von der Strahlenquelle 54 emittierte Strahlung (Laserstrahlen 81) wird in der in Fig. 4a gezeigten ersten Konfiguration von einer ersten Spiegelanordnung 21 auf das Dokument (nicht dargestellt), welches auf einer Dokumentenaufnahme 121 einer Dokumententrägervorrichtung 12 platziert ist, geleitet. Durch diesen Vorgang wird ein sichtbares Element 551 auf das Dokument aufgebracht.

In der gezeigten Ausführungsform ist die Dokumententrägervorrichtung 12 entlang einer ersten Raumrichtung und die erste Spiegelanordnung 21 entlang einer zweiten Raumrichtung verfahrbar, wobei die beiden Raumrichtungen senkrecht aufeinander stehen. Die Position des sichtbaren Elements 551 auf dem Dokument wird also in die eine Raumrichtung (in die Zeichenebene hinein) durch die Position des Dokumententrägers 12 und in die andere Raumrichtung (in Zeichenebene von links nach rechts) durch die Position der ersten Spiegelanordnung 21 bestimmt. Somit kann das sichtbare Element auf jeder Position des Dokuments aufgebracht werden.

Die Dokumentenbearbeitungseinrichtung 11 weist zudem eine zweite Spiegelanordnung 22 auf, welche ebenfalls in den Bearbeitungsbereich verfahren werden kann. Gemäß den Zeichnungen wird der Bearbeitungsbereich mit dem Bezugszeichen 82a versehen, sofern sich die erste Spiegelanordnung 21 im Bearbeitungsbereich befindet (Fig. 4a) und mit dem Bezugszeichen 82b versehen, wenn sich die zweite Spiegelanordnung 22 im Bearbeitungsbereich befindet (Fig. 4b). Die Position des Bearbeitungsbereichs 82a, 82b und damit auch der Strahlungsquelle 54 verändert sich dabei nicht. Lediglich die Spiegelanordnungen 21, 22 werden in den Bearbeitungsbereich 82a, bzw. 82b hinein- und herausgefahren. Der Abstand zwischen den beiden Spiegelanordnungen 21, 22 ist fest vorgegeben.

Die beiden Spiegelanordnungen 21, 22 sind dabei um 90 Grad um eine vertikale Achse verdreht angeordnet, wodurch die emittierte Strahlung ebenfalls um 90 Grad verdreht auf das Dokument geleitet wird. Somit können in der gezeigten Ausführungsform der Erfindung sowohl CLI- als auch MLI-Elemente auf das Dokument aufgebracht werden. Durch unterschiedliche Positionierungen der Spiegelanordnungen 21, 22 im Bearbeitungsbereich 82a, 82b in die eine Raumrichtung und durch eine unterschiedliche Positionierung des Dokuments durch die Dokumententrägervorrichtung 12 in die andere Raumrichtung können die sichtbaren Elemente an unterschiedlichen Positionen auf das Dokument aufgebracht werden. Dabei können die Spiegelanordnungen 21, 22, wie in den Figs. 4a, 4b gezeigt, auch unterschiedliche Abstände in vertikaler Richtung zum Dokument, also unterschiedliche Höhen aufweisen.

Vorteilhafterweise können die Spiegelanordnungen 21, 22 ausgerichtet werden, das heißt entweder in Ihrer Höhe (vertikaler Abstand zum Dokument) verändert oder beispielsweise um ihre vertikalen oder horizontalen Achsen gedreht werden.

Die Bearbeitungseinrichtung 11, bzw. die darin enthaltenen Spiegelanordnungen 21, 22 können auch derart verfahren werden, dass die von der Strahlungsquelle 54 emittierte Strahlung direkt auf das Dokument gerichtet wird. Dies entspräche einer nicht dargestellten dritten Konfiguration, bei der sich die erste Spiegelanordnung 21 auf der einen Seite und die zweite Spiegelanordnung 22 auf der anderen des Bearbeitungsbereichs 82a, 82b befindet. Ebenso sind Ausführungsformen denkbar, bei denen andere Bearbeitungswerkzeuge wie Gravierwerkzeuge o.ä. in der Bearbeitungseinrichtung 11 enthalten sind, welche ebenfalls in den Bearbeitungsbereich 82 gefahren werden können.

In der Dokumentenaufnahme 121 der Dokumententrägervorrichtung 12 ist eine Heizeinrichtung 126 vorgesehen, welche in der Fig. 4a durch Löcher in der Oberfläche der Dokumentenaufnahme 121 angedeutet ist. In dieser Ausführungsform ist die Heizeinrichtung 126 durch ein Heizelement gegeben, welches in Teilen aus den Löchern durch einen Aktuator herausgefahren werden kann, um somit Wärme an ein darauf befindliches Dokument 51 abzugeben. Wird keine Wärmezufuhr benötigt wird das Heizelement wieder abgesenkt, sodass eine Wärmezufuhr weitestgehend unterbunden wird.

Durch die gezeigte Ausführungsform können anhand der Verfahrensmöglichkeit der Spiegelanordnungen 21, 22 und des Dokumententrägers 12 ohne aufwendige Änderungen der Anordnung verschiedene Kippbilder auf das Dokument aufgebracht werden und die Position der Kippbilder innerhalb der Bearbeitungsfläche 122 frei gewählt werden.

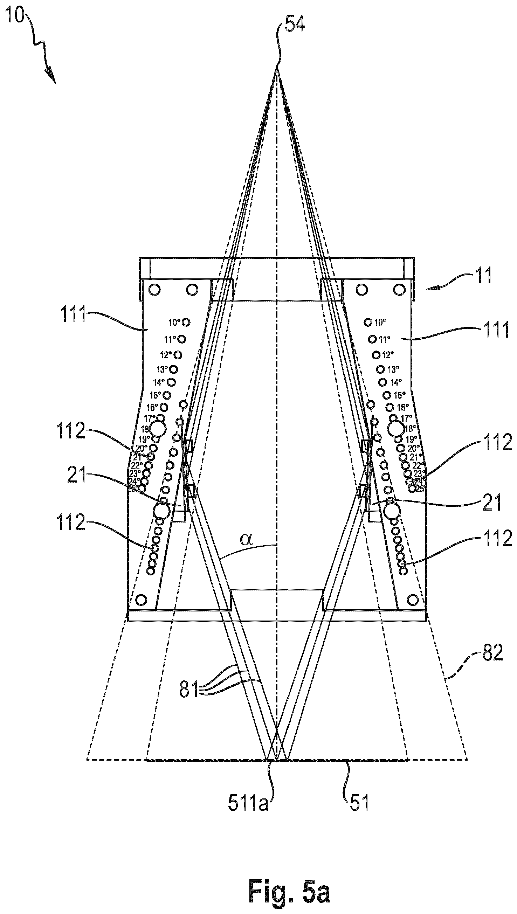

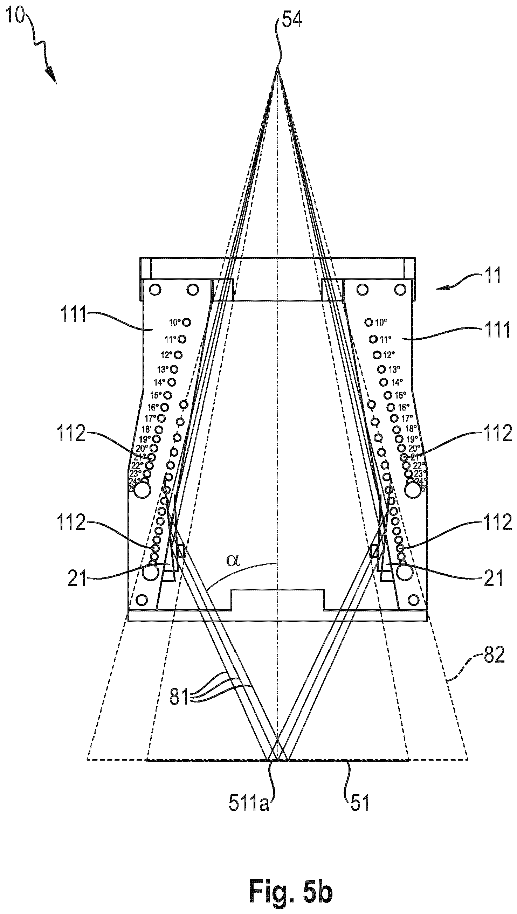

**Fig. 5a** und **5b** zeigen eine Dokumentenbearbeitungseinrichtung 11 einer zweiten Ausführungsform eines erfindungsgemäßen Dokumentenbearbeitungssystems 10 jeweils in einer Seitenansicht, wobei die Figuren unterschiedliche Konfigurationen der Dokumentenbearbeitungseinrichtung 11 zeigen. Die Konfigurationen unterscheiden sich dadurch, dass die abgebildete erste Spiegelanordnung 21 unterschiedlich positioniert ist. Es sei an dieser Stelle angemerkt, dass die Abbildung ebenso eine Seitenansicht mit der zweiten Spiegelanordnung 22 darstellen könnte.

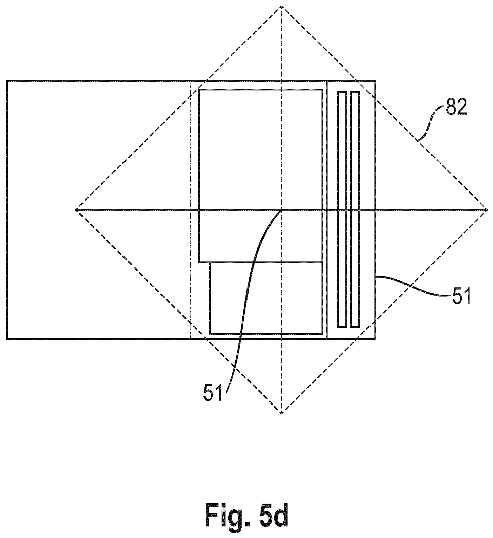

Oberhalb der Dokumentenbearbeitungseinrichtung 11 ist eine Strahlenquelle 54 vorgesehen, welche in der Lage ist Laserstrahlen innerhalb eines Bearbeitungsbereichs 82 zu emittieren. Der Bearbeitungsbereich 82 weist dabei eine rechteckige, in der gezeigten Ausführungsform insbesondere quadratische Querschnittsform auf und ist durch die gestrichelten Linien angedeutet (siehe auch Fig. 5d).

Die im Bearbeitungsbereich 82 emittierte Strahlung kann weiterhin durch eine erste Spiegelanordnung 21 auf ein Dokument 51 geleitet werden. Die erste Spiegelanordnung 21 besteht aus zwei sich gegenüberliegenden Spiegeln welche zwischen zwei Trägerelementen 111 der Dokumentenbearbeitungseinrichtung 11 angeordnet sind. Die Spiegelanordnung 21 ist parallel zur Längsrichtung des viereckigen, insbesondere parallelogrammförmigen Dokuments 51 angeordnet. Die Trägerelemente 111 weisen jeweils Öffnungen auf, in welche entsprechende an den Spiegeln angeordnete Gegenelemente eingreifen. Die Gegenelemente können aus den Öffnungen entnommen und in andere dafür vorgesehene Öffnungen eingesetzt werden, um die Position des entsprechenden Spiegels und gleichzeitig dessen Orientierung zu ändern. Die Öffnungen sind somit in Verbindung mit den Gegenelementen als Verstellvorrichtung 112 zu verstehen.

Eine durch die Strahlenquelle 54 im Bearbeitungsbereich 82 emittierte Strahlung 81 wird durch die erste Spiegelanordnung 21 auf das Dokument 51 geleitet. Die Spiegel der ersten Spiegelanordnung 21 sind dabei symmetrisch angeordnet, das heißt, sie befinden sich auf der gleichen Höhe (Position) über dem Dokument 51 und reflektieren die Strahlung 81 im gleichen Winkel auf die Oberfläche des Dokuments 51. Dieser Winkel wird als erster definierter Winkel α bezeichnet und legt fest unter welchem Winkel ein auf diese Weise eingeprägtes erstes sichtbares Element 551a zu sehen ist. Die Wahl des Winkels hängt dabei insbesondere von der Wahl des Materials des Dokuments 51 sowie den spezifischen Kundenanforderungen ab.

Beim Vergleich der beiden in den Figuren 5a und 5b gezeigten Konfigurationen ist zu erkennen, dass die erste Spiegelanordnung 21 in der in Fig. 5a gezeigten ersten Konfiguration höher angeordnet ist als in der in Fig. 5b gezeigten zweiten Konfiguration und somit der Winkel α unter welchem die Strahlung auf das Dokument 51 geleitet wird anders sind. Die Höhenverstellung wird durch die Verstellvorrichtung 112 vorgenommen. Eine Konfiguration ist somit durch eine definierte Position der ersten Spiegelanordnung 21 definiert. Durch die entsprechende Definition der Öffnungen wird ebenfalls die Ausrichtung der Spiegel bestimmt, dass der Winkel α in dem die Strahlung auf das Dokument 51 trifft, reproduzierbar an eine Position der Spiegel geknüpft ist. Vorzugsweise sind zum besseren Verständnis die Öffnungen beschriftet, um die Bedienung und Einstellung der Konfigurationen zu vereinfachen. Die Änderung des Winkels α unter dem die Strahlung auf das Dokument 51 trifft kann somit durch die unterschiedlichen Konfigurationen eingestellt werden, wobei die Spiegel der ersten Spiegelanordnung 21 immer symmetrisch verstellt werden. Die Verstellvorrichtung 112 kann dabei automatisiert umgesetzt oder auf manuelle Durchführung der Änderung der Konfiguration angewiesen sein.

Das zu erstellende sichtbare Element 551a, 551b wird von der Dokumentenbearbeitungseinrichtung 11 aus immer an der gleichen Stelle erzeugt. Die Position des zu erstellenden sichtbaren Elements 551a, 551b auf dem Dokument 51 wird in eine Koordinatenrichtung des Dokuments durch die Dokumententrägervorrichtung 12 eingestellt. Dabei wird das zu erzeugende sichtbare Element 551a, 551b mittig unter dem Dokumentenbearbeitungssystem 10 erzeugt. Auf diese Weise kann erzielt werden, dass keine Einstellung der Software bei Änderung der Spiegelausrichtung und Position notwendig ist. Dadurch kann eine einfache Umstellung des Dokumentenbearbeitungssystems 10 auf unterschiedliche Dokumenten 51 mit unterschiedlichen Anforderungen und Materialien realisiert werden.

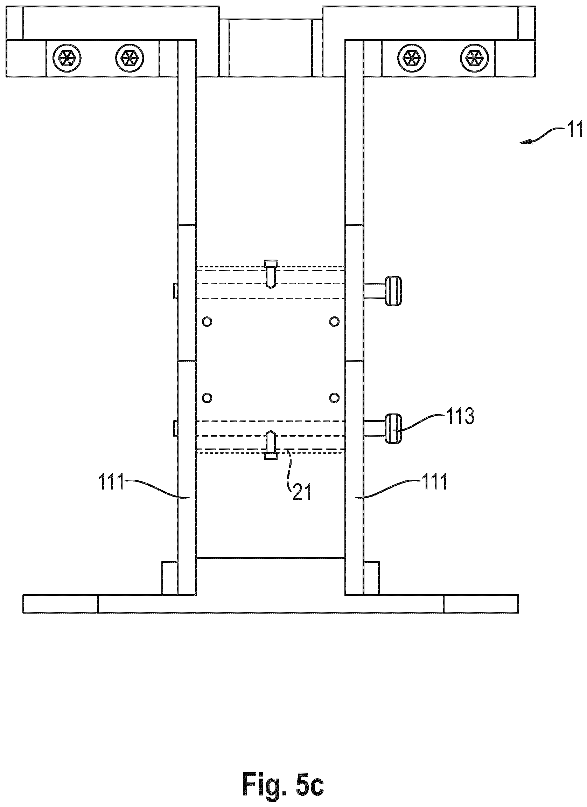

In Bezug auf Fig. 5c wird im Folgenden die Verstellvorrichtung 112 der Spiegelanordnungen näher beschrieben. Fig. 5c zeigt die in den Figuren 5a und 5b abgebildete Anordnung in einer um 90 Grad gedrehten Seitenansicht, wobei jeder Spiegel der ersten Spiegelanordnung 21 an zwei Trägerelementen 111 befestigt ist. Die Befestigung erfolgt mittels der Verstellvorrichtung 112. Dazu sind Gegenelemente 113 in Form von Stiften in dafür an den Trägerelementen 111 vorgesehene Öffnungen, insbesondere Passbohrungen, in Zeichenebene der Figur von rechts nach links eingeführt. Der entsprechend befestigte Spiegel kann dadurch mit einer hohen Genauigkeit gelagert werden. Die Gegenelemente 113 werden anhand einer Klemmung durch in einer an der Rücksteite des Spiegels angeordneten Anlegeplatte befindlichen Federdruckstifte fixiert. Diese fixieren die Gegenelemente 113 im montierten Zustand. Die Gegenelemente 113 erstrecken sich dabei von einer Seite durch das in Zeichenebene rechte Trägerelement 111 durch die Anlegeplatte des Spiegels bis zum in Zeichenebene linken Trägerelement 111. Es sind weiterhin Ausführungsformen der Erfindung möglich, bei denen von beiden Seiten entsprechende Gegenelemente 113 eingesetzt werden. Die Gegenelemente 113 können sowohl bei beidseitig vorzusehenden als auch bei einseitig vorzusehenden Gegenelementen 113 sowohl mit einem Gewinde ausgestattet sein, um eine Verschraubung in einem der Trägerelemente 113 zu ermöglichen, als auch als glatte Stifte ausgeführt sein.

Durch die beschriebene Ausführungsform der Verstellvorrichtung 112 kann somit der entsprechende Spiegel in der richtigen Höhe, als auch mit dem richtigen Winkel positioniert werden, da durch die vorgegebenen Öffnungen ebenfalls die Orientierung beeinflusst werden kann.

Weiterhin soll mit Blick auf **Fig. 5d** auf den Bearbeitungsbereich 82 näher eingegangen werden. Fig. 5d zeigt den Bearbeitungsbereich 82 der in den Fig. 5a, 5b und 5c gezeigten zweiten Ausführungsform in einer Draufsicht. Der Bearbeitungsbereich 82 ist dabei gegenüber dem Dokument 51 um 45 Grad gedreht. Dadurch ist es möglich die erste Spiegelanordnung 21 weiter nach außen zu schieben, sodass sie immer noch im Bearbeitungsbereich 82 liegt, aber den direkten Weg zwischen Strahlenquelle 54 und Dokument 51 nicht versperrt, um so die Möglichkeit zu schaffen ohne Umbau der ersten Spiegelanordnung 21 anhand der Strahlenquelle 54 Personalisierungen auf dem Dokument 51 vorzunehmen (ohne Nutzung der ersten Spiegelanordnung 21). Entsprechend kann durch die Drehung des Bearbeitungsbereichs 82 dieser vollständig ausgenutzt werden. Alternativ könnte ebenfalls eine Strahlenquelle 54 mit einem größeren Bearbeitungsbereich 82 eingesetzt werden, wodurch allerdings größere Gefahren durch die erzeugbare Strahlung (insbesondere Laserstrahlung) entstehen, welche entsprechend aufwändig eingedämmt werden muss.

### BEZUGSZEICHENLISTE

- 10: Dokumentenbearbeitungssystem
- 11: Dokumentenbearbeitungseinrichtung
- 111: Trägerelement
- 112: Verstellvorrichtung
- 113: Gegenelement
- 12: Dokumententrägervorrichtung
- 121: Dokumentenaufnahme
- 122: Bearbeitungsfläche
- 123: Aussparung
- 124: Kartenposition
- 126: Heizeinrichtung
- 21: erste Spiegelanordnung
- 22: zweite Spiegelanordnung
- 51: Dokument
- 54: Strahlenquelle
- 551: sichtbares Element
- 551a: erstes sichtbares Element
- 551b: zweites sichtbares Element
- 81: Laserstrahlen
- 82: Bearbeitungsbereich
- 82a: erster Bearbeitungsbereich
- 82b: zweiter Bearbeitungsbereich
- α: erster definierter Winkel

## Patentansprüche

1. Dokumentenbearbeitungssystem (10), insbesondere zur Bearbeitung von Sicherheitsdokumenten, aufweisend,
wenigstens eine Dokumententrägervorrichtung (12) mit einer Dokumentenaufnahme (121), dazu konfiguriert ein zu bearbeitendes Dokument (51) aufzunehmen und entlang einer ersten Raumrichtung zu transportieren,
wenigstens eine Dokumentenbearbeitungseinrichtung, dazu konfiguriert das Dokument (51) in einem Bearbeitungsbereich (82a, 82b) zu bearbeiten, sodass ein sichtbares Element (551) auf dem Dokument (51) entsteht,
wobei die Dokumentenbearbeitungseinrichtung eine Strahlenquelle (54) und wenigstens eine erste Spiegelanordnung (21) und wenigstens eine zweite Spiegelanordnung (22) aufweist, wobei die Spiegelanordnungen (21, 22) jeweils dazu konfiguriert sind, von der Strahlenquelle (54) emittierte Strahlung zur Erzeugung eines sichtbaren Elements (551) unter einem bestimmten Winkel und/oder aus einer bestimmten Richtung auf das Dokument (51) zu leiten,
wobei die Spiegelanordnungen (21, 22) weiterhin dazu ausgebildet sind in den Bearbeitungsbereich (82a, 82b) verfahren zu werden.

2. Dokumentenbearbeitungssystem (10) gemäß dem vorhergehenden Anspruch, wobei die zweite Spiegelanordnung (22) um 90 Grad gedreht zur ersten Spiegelanordnung (21) angeordnet ist.

3. Dokumentenbearbeitungssystem (10) gemäß einem der vorhergehenden Ansprüche, wobei die Strahlenquelle (54) Laserstrahlen (81) in einem viereckigen Bearbeitungsbereich (82) emittiert und das Dokument (51) ebenfalls eine viereckige Form aufweist, wobei weiterhin der Bearbeitungsbereich (82) gegenüber dem Dokument (51) um einen definierten Winkel, insbesondere 45 Grad, gedreht ist.

4. Dokumentenbearbeitungssystem (10) gemäß einem der vorhergehenden Ansprüche, wobei die Spiegelanordnungen (21, 22) dazu ausgebildet sind entlang einer zweiten Raumrichtung in den Bearbeitungsbereich (82a, 82b) verfahren zu werden.

5. Dokumentenbearbeitungssystem (10) gemäß dem vorhergehenden Anspruch, wobei die erste Raumrichtung identisch zur zweiten Raumrichtung ist.

6. Dokumentenbearbeitungssystem (10) gemäß dem vorhergehenden Anspruch 3, wobei die erste Raumrichtung unterschiedlich zur zweiten Raumrichtung ist und insbesondere die erste Raumrichtung senkrecht auf die zweite Raumrichtung steht.

7. Dokumentenbearbeitungssystem (10) gemäß einem der vorhergehenden Ansprüche, wobei die Dokumententrägervorrichtung (12) eine Heizeinrichtung (126) aufweist, welche dazu ausgebildet ist, Wärme an das von der Dokumententrägervorrichtung (12) aufgenommene Dokument (51) abzugeben.

8. Dokumentenbearbeitungssystem (10) gemäß dem vorhergehenden Anspruch, wobei die Heizeinrichtung (126) einen Aktuator aufweist, welcher dazu ausgerichtet ist eine Relativbewegung zwischen einem Wärmeleitelement und der Dokumentenaufnahme (121) zu bewirken, um zwischen einem ersten Betriebsmodus und einem zweiten Betriebsmodus der Dokumententrägervorrichtung (12) zu wechseln, wobei in dem ersten Betriebsmodus sich das Wärmeleitelement durch eine oder mehrere Aussparungen in der Dokumentenaufnahme (121) hindurch erstreckt, um von der Heizeinrichtung (126) erzeugte Wärme zumindest abschnittsweise auf das Dokument (51) übertragen zu können; und
wobei in dem zweiten Betriebsmodus das Wärmeleitelement einen gegenüber seiner Lage im ersten Betriebsmodus vergrößerten Abstand vom Dokument (51) aufweist.

9. Dokumentenbearbeitungssystem (10) gemäß einem der vorhergehenden Ansprüche, wobei das Dokumentenbearbeitungssystem (10) eine Verstellvorrichtung (112) aufweist, welche dazu ausgebildet ist, die Position und Ausrichtung der wenigstens einen ersten Spiegelanordnung (21) und/oder der wenigstens einen zweiten Spiegelanordnung (22) derart zu ändern, dass der entsprechende definierte Winkel, unter dem die von der Strahlenquelle (54) emittierte Strahlung auf das Dokument (51) auftrifft, verändert wird, ohne die Position des Auftreffens der Strahlung auf dem Dokument (51) zu verändern.

10. Dokumentenbearbeitungssystem (10) gemäß dem vorhergehenden Anspruch, wobei die Verstellvorrichtung (112) Aufnahmen, insbesondere in Form von Öffnungen, aufweist, welche dazu ausgebildet sind entsprechende an der wenigstens einen ersten Spiegelanordnung (21) angeordnete Gegenelemente zur Befestigung der ersten Spiegelanordnung (21) aufzunehmen.

11. Verfahren zur Bearbeitung eines Dokuments (51) in einem Dokumentenbearbeitungssystem (10) gemäß einem der vorhergehenden Ansprüche, aufweisend die folgenden Schritte,
Verfahren einer Dokumententrägervorrichtung (12) in eine Aufnahmeposition, in welcher ein Dokument (51) auf einer Dokumentenaufnahme (121) der Dokumententrägervorrichtung (12) platziert wird,
Verfahren der Dokumententrägervorrichtung (12) entlang einer ersten Raumrichtung in einen Bearbeitungsbereich (82a, 82b) des Dokumentenbearbeitungssystems (10),
Verfahren einer ersten Spiegelanordnung (21) in den Bearbeitungsbereich (82a, 82b), sodass von einer Strahlenquelle (54) im Bearbeitungsbereich (82a, 82b) emittierte Strahlung über die erste Spiegelanordnung (21) zur Erstellung eines sichtbaren Elements (551) auf das Dokument (51) geleitet wird,
Verfahren einer zweiten Spiegelanordnung (21) in den Bearbeitungsbereich (82a, 82b), sodass von der Strahlenquelle (54) im Bearbeitungsbereich (82a, 82b) emittierte Strahlung über die zweite Spiegelanordnung (21) zur Erstellung eines weiteren sichtbaren Elements (551) auf das Dokument (51) geleitet wird,
Verfahren der Dokumententrägervorrichtung (12) in eine Ausgabeposition, in welcher das Dokument (51) von der Dokumentenaufnahme (121) entnommen wird.
